# EUROPEAN PATENT SPECIFICATION

(11) **EP 2 497 793 B1**
(45) Date of publication and mention of the grant of the patent: **27.07.2016**
(21) Application number: 12158775.2
(22) Date of filing: 09.03.2012
(51) Int. Cl.: C08G 63/06, C08G 64/02, C08G 64/18, C08G 81/00, C08J 3/12, C08J 9/36, C08J 9/42, C08J 7/04, D06M 14/04, D06M 15/507, D06M 23/10

(54) **Application of supercritical fluid technology for manufacturing soft tissue repair medical articles**
Anwendung von superkritischer Fluidtechnologie zur Herstellung medizinischen Artikeln zur Weichgewebereparatur
Application de la technologie de fluide supercritique pour la fabrication d'articles médicaux de réparation de tissus mous

(30) Priority: 11.03.2011 US 201161451650 P; 01.03.2012 US 201213409395
(43) Date of publication of application: 12.09.2012
(73) Proprietor: Covidien LP, Mansfield, MA 02048 (US)
(72) Inventor: Belcheva, Nadya, Hamden, CT Connecticut 06518 (US)
(74) Representative: Soames, Candida Jane

(56) References cited:
- GB-A- 2 152 944
- US-A- 5 578 691
- US-A1- 2004 072 985
- US-A1- 2005 153 149
- US-A1- 2008 090 984
- PRINCI E ET AL: "Grafting polymerization on cellulose based textiles: A <13>C solid state NMR characterization", EUROPEAN POLYMER JOURNAL, PERGAMON PRESS LTD. OXFORD, GB, vol. 41, no. 6, 25 February 2005 (2005-02-25), pages 1196-1203, XP027696184, ISSN: 0014-3057 [retrieved on 2005-06-01]
- LIU X ET AL: "Grafting modification of ramie fibers with poly(2,2,2-trifluoroethyl methacrylate) via reversible addition-fragmentation chain transfer (RAFT) polymerization in supercritical carbon dioxide", REACTIVE & FUNCTIONAL POLYMERS, ELSEVIER SCIENCE PUBLISHERS BV, NL, vol. 70, no. 12, 21 October 2010 (2010-10-21), pages 972-979, XP027501819, ISSN: 1381-5148, DOI: 10.1016/J.REACTFUNCTPOLYM.2010.10.007 [retrieved on 2010-11-16]
- DATABASE COMPENDEX [Online] ENGINEERING INFORMATION, INC., NEW YORK, NY, US; June 2010 (2010-06), LUO B ET AL: "Synthesis of CS-g-PDLLA copolymer and in-situ fabrication of CS-g-PDLLA/PDLLA porous scaffolds in supercritical carbon dioxide", XP002712099, Database accession no. E20103013098431 & CAILIAO YANJIU XUEBAO/CHINESE JOURNAL OF MATERIALS RESEARCH JUNE 2010 CHINESE JOURNAL OF MATERIALS RESEARCH CHN, vol. 24, no. 3, June 2010 (2010-06), pages 225-231,
- GANAPATHY ET AL: "Ring-opening polymerization of l-lactide in supercritical carbon dioxide using PDMS based stabilizers", EUROPEAN POLYMER JOURNAL, PERGAMON PRESS LTD. OXFORD, GB, vol. 43, no. 1, 14 December 2006 (2006-12-14), pages 119-126, XP005803548, ISSN: 0014-3057, DOI: 10.1016/J.EURPOLYMJ.2006.10.009
- DONG H ET AL: "The synthesis of biodegradable graft copolymer cellulose-graft-poly(l-lactide) and the study of its controlled drug release", COLLOIDS AND SURFACES. B, BIOINTERFACES, ELSEVIER, AMSTERDAM, NL, vol. 66, no. 1, 20 May 2008 (2008-05-20), pages 26-33, XP022939855, ISSN: 0927-7765, DOI: 10.1016/J.COLSURFB.2008.05.007 [retrieved on 2008-05-20]
- GANG-SHENG T ET AL: "Supercritical carbon dioxide-assisted preparation of polypropylene grafted acrylic acid with high grafted content and small gel percent", JOURNAL OF SUPERCRITICAL FLUIDS, PRA PRESS, US, vol. 48, no. 3, 10 November 2008 (2008-11-10), pages 261-268, XP026004197, ISSN: 0896-8446, DOI: 10.1016/J.SUPFLU.2008.11.017 [retrieved on 2008-11-27]
- URBANCZYK L ET AL: "Synthesis of polylactide/clay nanocomposites by in situ intercalative polymerization in supercritical carbon dioxide", EUROPEAN POLYMER JOURNAL, PERGAMON PRESS LTD. OXFORD, GB, vol. 45, no. 3, 3 December 2008 (2008-12-03), pages 643-648, XP025960934, ISSN: 0014-3057, DOI: 10.1016/J.EURPOLYMJ.2008.11.033 [retrieved on 2008-12-03]
- BUSBY A J; ZHANG J; ROBERTS C J; LESTER E; HOWDLE S M: "Novel nanostructured polymeric composites of polycaprolactone and ultra-high-molecular-weight polyethylene via a supercritical-fluid route", ADVANCED MATERIALS, vol. 17, no. 3, 10 February 2005 (2005-02-10), pages 364-367, XP002712100,

## Description

### BACKGROUND

The present disclosure relates to medical devices which include a porous substrate having polymers grafted onto a surface thereof and methods for preparing the same, as well as methods for post-processing medical devices using supercritical fluids.

Various types of implants are commonly used in biomedical applications. Implants are used in repair of hard tissue (e.g., cartilage, bone, etc.) as well as soft tissue (e.g., muscle, connective tissue, etc.). However, the body responds to the foreign object by isolating the implant with a flexible layer of fibrous tissue that can easily cause an implant to loosen. This is detrimental to the usefulness of the implant. For example, in the case of dental implants, loosening of the implant can result in loss of the implanted tooth and can also lead to infections around the loosened implant. Methods for coating implantable devices that are capable of adhering to physiological structures remain desirable. PRINCI E ET AL, EUROPEAN POLYMER JOURNAL, PERGAMON PRESS LTD. OXFORD, GB, vol. 41, no. 6, ISSN 0014-3057, 20050225, PAGE 1196 - 1203 5,10 p. 1197 relates to grafting polymerization on cellulose based textiles and describes the use of cellulose chains with oxidised sites.

### SUMMARY

The present disclosure provides processes for producing coated substrate materials.

The present invention provides a process comprising oxidizing a substrate material to form an oxidized substrate material; contacting at least one aliphatic cyclic ester with at least one catalyst in a supercritical fluid to from at least one polyester; exposing at least a portion of the oxidized substrate material to the supercritical fluid possessing the at least one polyester; and grafting the at least one polyester onto or within the oxidized substrate material.

In further embodiments, a process of the present disclosure includes exposing cellulose to an oxidation medium comprising a supercritical fluid to form oxidized cellulose; contacting at least one aliphatic cyclic ester with at least one catalyst and the supercritical fluid to from at least one polyester; contacting at least a portion of the oxidized cellulose with the supercritical fluid possessing the at least one polyester; and grafting the at least one polyester onto or within the oxidized cellulose. Further optional features of the invention are set out in the accompanying claims.

### DETAILED DESCRIPTION

The present disclosure provides a system and method for synthesizing composite materials via ring-opening polymerization of aliphatic cyclic esters in Supercritical fluid. As used herein, the term "supercritical fluid" may be used interchangeably with "densified fluid" and refers to any composition that is above a temperature and pressure at which the phase boundary (e.g., between liquid, gas, or solid) do not exist, i.e., critical state.

The composite materials are formed by submerging at least a portion of a substrate material into a composition including the supercritical fluid, the aliphatic cyclic esters, and an optional catalyst. Ring-opening polymerization of the cyclic esters proceeds in the supercritical fluid, thereby forming polyesters which are then grafted onto a surface of the substrate material to form a coating. As used herein, the term "grafting" denotes attaching the polymers to the substrate to form a coating. In embodiments, the polyesters may be entangled within the structural elements (e.g., pores) of the substrate material.

The substrate material may be formed from any suitable biodegradable materials, such as polymers including, but are not limited to, poly(amino acids) including proteins such as collagen (I, II and III), elastin, fibrin, fibrinogen, silk, and albumin; peptides including sequences for laminin and fibronectin (RGD); polysaccharides such as hyaluronic acid (HA), dextran, alginate, chitin, chitosan, and cellulose; glycosaminoglycan; gut; and combinations thereof. As used herein, collagen includes natural collagen such as animal derived collagen, gelatinized collagen, and/or synthetic collagen such as human or bacterial recombinant collagen.

Additionally, synthetically modified natural polymers may be utilized. Such modified polymers include cellulose and polysaccharide derivatives, including alkyl celluloses, hydroxyalkyl celluloses, cellulose ethers, cellulose esters, nitrocelluloses, and chitosan. Examples of suitable cellulose derivatives include methyl cellulose, ethyl cellulose, hydroxypropyl cellulose, hydroxypropyl methyl cellulose, hydroxybutyl methyl cellulose, cellulose acetate, cellulose propionate, cellulose acetate butyrate, cellulose acetate phthalate, carboxymethyl cellulose (CMC), cellulose triacetate, and cellulose sulfate sodium salt. These may be collectively referred to herein, in embodiments, as "celluloses."

In embodiments, the substrate material may be oxidized cellulose. Oxidized cellulose may be formed using any technique within the purview of those skilled in the art. Cellulose may be oxidized by exposing it to an oxidation medium, such as a densified or supercritical fluid including, but not limited to, nitrogen dioxide, carbon dioxide, combinations thereof and the like. In embodiments, the oxidation medium may include a combination of densified or supercritical fluids, such as nitrogen dioxide dissolved in carbon dioxide. The oxidation reaction of the cellulose material may be carried out in a closed system in the presence of the oxidizing medium and oxygen for a period of time of from about 10 minutes to about 20 hours, in embodiments from about 1 hours to about 10 hours, at a temperature of from about 20° C to about 60° C, in embodiments from about 30° C to about 50° C, and at a pressure of from about 2 mpa (20 bars) to about 25 mpa (250 bars), in embodiments from about 8 mpa (80 bars) to about 18 mpa (180 bars).

The cellulose material is placed in a reactor, which is then filled with the oxidizing medium. The oxidizing medium may be used in excess in relation to the amount of the cellulose. Amounts of the oxidizing medium may be adjusted based on the operating conditions selected for obtaining oxidized cellulose having the desired carboxyl content. Methods for oxidizing cellulose materials using densified fluids are disclosed, for example, in U.S. Patent Application Publication No. 2008/0194805, Methods for preparing oxidized cellulose hemostat materials are also disclosed, for example, in U.S. Patent Nos. 3,364,200; 4,626,253; 5,484,913; and 6,500,777. In further embodiments, the substrate may be formed from polyethylene terephthalate.

In embodiments, the substrate material may be of any form and structure including, but not limited to, meshes, foams, fibers, particles, and the like. Where the substrate material is fibrous, the substrate material may be formed using any method suitable for forming fibrous structures including, but not limited, to knitting, weaving, non-woven techniques, wet-spinning, electro-spinning, extrusion, co-extrusion, and the like. In embodiments, the substrate may be a textile having a three-dimensional structure, such as the textiles described in U.S. Patent Nos. 7,021,086 and 6,443,964, the entire disclosures of each of which are incorporated by reference herein.

In embodiments, the substrate material may be composed of fibers that are made entirely from cellulose. In other embodiments, the substrate material may be composed of fibers that are made from a composition containing cellulose and another biocompatible material. In yet other embodiments, the substrate material may be made from a combination of fibers of different composition, e.g., some fibers made from a composition that includes cellulose (either 100% cellulose or a combination of cellulose and another material), and some fibers made from some other natural or synthetic biocompatible material. In embodiments, the substrate material may be made from fibers that contain from about 5% to about 100% cellulose by weight, in other embodiments from about 20% to about 90% cellulose by weight, in yet other embodiments from about 50% to about 80% cellulose by weight. The fibers of the substrate material may also contain conventional additives such as plasticizers, colorants or the like.

In embodiments where the substrate material is a foam, the substrate material may be formed using any method suitable to forming a foam or sponge including, but not limited to, lyophilization or freeze-drying of a composition. In embodiments, the porous substrate may be formed by foaming supercritical carbon dioxide through a polymer composition as described in H. Tai et al., "Putting The Fizz Into Chemistry: Applications of Supercritical Carbon Dioxide in Tissue Engineering, Drug Delivery and Synthesis of Novel Block Copolymers," Biochem. Soc. Trans. 35 (2007), pp. 516 - 521,

The foam may be cross-linked or non-cross-linked, and may include covalent or ionic bonds. Suitable techniques for making foams are within the purview of those skilled in the art. In embodiments, the foam may contain from about 5% to about 100% cellulose by weight, in other embodiments from about 20% to about 90% cellulose by weight, in yet other embodiments from about 50% to about 80% cellulose by weight. In addition to cellulose, the foam may contain any natural or synthetic biocompatible material. The foam may also contain conventional additives such as plasticizers, colorants or the like.

The size of the pores in the substrate material may be from about 2 µm to about 300 µm, in embodiments from about 50 µm to about 150 µm. It is envisioned that the pores may be arranged in any manner. For example, the pores may be configured in a random or uniform manner. In some embodiments, the pores may be formed with the use of copper alginate to create a honey-comb shaped substrate material. In still other embodiments, the pores may be configured to create a gradient in the substrate material. The gradient may further enhance the ability of the substrate material to absorb the physiologic fluid. As used herein, the term "gradient" refers to a gradual transition in the size of the pores, e.g., increasing in size, across the surface of the substrate and/or throughout the material one point of the substrate to another.

As noted above, a coating is formed on the substrate by ring-opening polymerization of cyclic aliphatic esters. In embodiments, cyclic aliphatic esters may include, but not limited to, lactide (including lactic acid, D-,L- and meso lactide); glycolide (including glycolic acid); ε - caprolactone; p-dioxanone (1,4-dioxan-2-one); trimethylene carbonate (1,3-dioxan-2-one); alkyl derivatives of trimethylene carbonate; γ -valerolactone; β-butyrolactone; γ-butyrolactone; ε-decalactone; hydroxyvalerate; pivalolactone; α,α-diethylpropiolactone; ethylene carbonate; ethylene oxalate; and combinations thereof.

The ring-opening polymerization of the aliphatic cyclic esters and the grafting of the resulting polymers onto or within the substrate materials is carried out in the presence of a supercritical fluid and a catalyst. Suitable supercritical fluids for the ring-opening polymerization may be the same as those used for oxidation of cellulose and include, but are not limited to, nitrogen dioxide and carbon dioxide. In embodiments, the supercritical fluid may include a combination of supercritical fluids, such as nitrogen dioxide being dissolved in carbon dioxide, methane, ethane, propane, ethylene, propylene, acetone, and combinations thereof. The reaction may be carried out in an inert moisture-free atmosphere (e.g., nitrogen dioxide) with water content below 120 ppm. The ring-opening polymerization of the aliphatic cyclic esters may be carried out at a temperature of from about 20° C to about 60° C, in embodiments from about 30° C to about 50° C and pressure from about 2 mpa (20 bar) to about 25 mpa (250 bar), in embodiments from about 8 mpa (80 bar) to about 18 mpa (180 bar).

The ring-opening polymerization occurs in the presence of a catalyst. The catalyst may be metal-based or enzyme-based catalysts. Metal-based catalysts include, but are not limited to, metal alkoxides, including aluminum alkoxides which may be prepared by a reaction of triethylaluminum with an alcohol, zinc alkoxides, including zinc acetate, tin alkoxides, including, stannous octoate (tin(ii) bis-(2-ethylhexanoate)), rare earth derivates, including yttrium-based catalysts (e.g., Y(OCH2CH2OMe Y[N(SiMe3)2]3), halo-bridged samarium (III) complexes (e.g., Sm(µ-X)(M(SiMe3)2)2(THF)]2, non-halo-bridged samarium (III) complexes (e.g., SmCp3, Sm(NC6H5)3)3, Sm(N(SiMe3)2)3), Lewis acid metal halogenides (e.g., ZnCl2), and combinations thereof. Other suitable catalysts for ring-opening polymerization of aliphatic cyclic esters are described in Jérôme et al. "Recent Advances in Synthesis of Aliphatic Polyesters by Ring-Opening Polymerization," Advanced Drug Delivery Review 60 (2008), pp. 1056 - 1076.

In further embodiments, the ring-opening polymerization may be carried out as an enzymatic polymerization. The enzymes thus serve as a catalyst in forming the polyester chains. Suitable enzymes to form polyesters from the ring-opening of the aliphatic cyclic esters include Pseudomonas family lipases, such as lipases from Pseudomonas aeruginosa (lipase PA), Pseudomonas cepacia (lipase PC), Pseudomonas fluorescens (lipase PF), as well as lipases from Aspegillus niger (lipase A), Candida antarctica (lipase CA or lipase B), Candida cylindracea (lipase CC), Klebsiella oxytoca (lipase K), Mucor meihei (lipase MM), cutinases such as the cutinase from Humicola insolens, combinations thereof, and the like.

The ring-opening polymerization may also occur in the presence of an optional initiator, which may be water that is present in the reactants, including the aliphatic cyclic esters and the substrate material.

In embodiments, prior to commencing the ring-opening polymerization of the cyclic ester, the substrate material may be oxidized in the supercritical fluid by exposing, or otherwise immersing, the substrate in a supercritical fluid as described above. The oxidation of the substrate and grafting may be carried continually in the same reactor. In embodiments, once the substrate material has been oxidized, the cyclic ester and the catalyst may be added to the supercritical fluid to commence the polymerization and grafting process in the same reactor. This eliminates the need to post-process (e.g., washing, drying, etc.) the oxidized substrate prior to carrying out the ring-opening polymerization. The cyclic aliphatic esters undergo ring-opening polymerization and the resulting polyesters are grafted onto or within the substrate material. Resulting polyesters may be intercalated within the substrate creating interpenetrating networks and/or grafted on the surface thereof. In embodiments, the substrate material may remain in the supercritical fluid, or it may be withdrawn while the reactants are added. If withdrawn prior to adding the reactants, the substrate material is immersed in the supercritical composition including the aliphatic cyclic esters and the catalyst.

In embodiments, the resulting polymer grafted substrate may possess the grafted polymer in an amount from about 1% by weight to about 25% by weight of the total weight of the coated substrate, in embodiments from about 5% by weight to about 10% by weight of the total weight of the coated substrate.

At the end of the reaction, washing of the coated substrate may be carried out by dilution, by generating a leakage flow rate of the solvent(s) and/or oxidizing medium mixture in the reactor, while at the same time maintaining the pressure above or at the same level as the working pressure. The oxidizing medium thus remains in the dissolved state in the densified fluid and can then be gradually eliminated. The dilution-washing process also allows to effectively remove the oxidizing medium and the other byproducts that might be within the coated substrate.

Washing may be carried out at a temperature from about 30 °C to about 50 °C. To ensure that all of the residual oxidizing medium has been eliminated, a sweep is advantageously carried out with an inert gas at low pressure. The coated substrate recovered at the end of the reaction may be washed to eliminate the reaction byproducts, such as HNO₃.

The resulting aliphatic polymer grafted substrate may then be used to form various medical devices suitable for a variety of surgical and wound applications. The medical devices according to the present disclosure may be any structure suitable for being attached or implanted into tissue, body organs or lumens, including, but not limited to, films, foams, slit sheets, pledgets, tissue grafts, stents, scaffolds, buttresses, wound dressings, meshes, and/or tissue reinforcements.

The resulting devices may be used, for example, for closing and healing visceral wall defects and incisions, including incisions due to the removal of tumors, wounds, anastomoses, and fistulae. The medical devices can improve the healing of a gastro-intestinal anastomosis and may provide an effective approach to the management and prevention of the formation of fistula. The medical devices may also prevent complications of polypectomy (e.g., bleeding and perforation). In embodiments, the medical devices may be reinforced with a mesh for the treatment of inguinal hernia and incisional hernia. The medical devices may have a thickness of from about 0.2 mm to about 20 mm, in embodiments from about 0.5 mm to about 10 mm.

In addition to providing hemostasis, the medical devices may further be used for delivery of a bioactive agent. Thus, in some embodiments, at least one bioactive agent may be provided in or on the substrate material, or within the polyester grafted thereon. In embodiments, the bioactive agent may be dissolved in the supercritical composition to allow for incorporation of the bioactive agent into the polymer and/or the substrate material. The bioactive agents can then penetrate the substrate material with the aid of the supercritical fluid, as described in U.S. Patent Publication No. 2009/0269480.

The term "bioactive agent", as used herein, is used in its broadest sense and includes any substance or mixture of substances that have clinical use. Consequently, bioactive agents may or may not have pharmacological activity per se, e.g., a dye, or fragrance. Alternatively a bioactive agent could be any agent that provides a therapeutic or prophylactic effect, a compound that affects or participates in tissue growth, cell growth, cell differentiation, an anti-adhesive compound, a compound that may be able to invoke a biological action such as an immune response, or could play any other role in one or more biological processes. It is envisioned that the bioactive agent may be applied to the present medical device in any suitable form of matter, e.g., films, powders, liquids, gels and the like.

Examples of classes of bioactive agents which may be utilized in accordance with the present disclosure include anti-adhesives, antimicrobials, analgesics, antipyretics, anesthetics, antiepileptics, antihistamines, anti-inflammatories, cardiovascular drugs, diagnostic agents, sympathomimetics, cholinomimetics, antimuscarinics, antispasmodics, hormones, growth factors, muscle relaxants, adrenergic neuron blockers, antineoplastics, immunogenic agents, immunosuppressants, gastrointestinal drugs, diuretics, steroids, lipids, lipopolysaccharides, polysaccharides, platelet activating drugs, clotting factors and enzymes. It is also intended that combinations of bioactive agents may be used.

Anti-adhesive agents can be used to prevent adhesions from forming between the implantable medical device and the surrounding tissues opposite the target tissue. In addition, anti-adhesive agents may be used to prevent adhesions from forming between the coated implantable medical device and the packaging material. Some examples of these agents include, but are not limited to hydrophilic polymers such as poly(vinyl pyrrolidone), carboxymethyl cellulose, hyaluronic acid, polyethylene oxide, poly vinyl alcohols, and combinations thereof

Suitable antimicrobial agents include triclosan, also known as 2,4,4'-trichloro-2'-hydroxydiphenyl ether, chlorhexidine and its salts, including chlorhexidine acetate, chlorhexidine gluconate, chlorhexidine hydrochloride, and chlorhexidine sulfate, silver and its salts, including silver acetate, silver benzoate, silver carbonate, silver citrate, silver iodate, silver iodide, silver lactate, silver laurate, silver nitrate, silver oxide, silver palmitate, silver protein, and silver sulfadiazine, polymyxin, tetracycline, aminoglycosides, such as tobramycin and gentamicin, rifampicin, bacitracin, neomycin, chloramphenicol, miconazole, quinolones such as oxolinic acid, norfloxacin, nalidixic acid, pefloxacin, enoxacin and ciprofloxacin, penicillins such as oxacillin and pipracil, nonoxynol 9, fusidic acid, cephalosporins, and combinations thereof. In addition, antimicrobial proteins and peptides such as bovine lactoferrin and lactoferricin B may be included as a bioactive agent in the bioactive coating of the present disclosure.

Other bioactive agents include local anesthetics, non-steroidal antifertility agents, parasympathomimetic agents, psychotherapeutic agents, tranquilizers, decongestants, sedative hypnotics, steroids, sulfonamides, sympathomimetic agents, vaccines, vitamins, antimalarials, anti-migraine agents, anti-parkinson agents such as L-dopa, anti-spasmodics, anticholinergic agents (e.g., oxybutynin), antitussives, bronchodilators, cardiovascular agents such as coronary vasodilators and nitroglycerin, alkaloids, analgesics, narcotics such as codeine, dihydrocodeinone, meperidine, morphine and the like, non-narcotics such as salicylates, aspirin, acetaminophen, d-propoxyphene and the like, opioid receptor antagonists, such as naltrexone and naloxone, anti-cancer agents, anti-convulsants, anti-emetics, antihistamines, anti-inflammatory agents such as hormonal agents, hydrocortisone, prednisolone, prednisone, non-hormonal agents, allopurinol, indomethacin, phenylbutazone and the like; prostaglandins and cytotoxic drugs, chemotherapeutics, estrogens, antibacterials, antibiotics, anti-fungals, anti-virals, anticoagulants, anticonvulsants, antidepressants, antihistamines, and immunological agents.

Other examples of suitable bioactive agents also include viruses and cells, peptides, polypeptides and proteins, analogs, muteins, and active fragments thereof, such as immunoglobulins, antibodies, cytokines (e.g., lymphokines, monokines, chemokines), blood clotting factors, hemopoietic factors, interleukins (IL-2, IL-3, IL-4, IL-6), interferons (β-IFN, (α-IFN and γ-IFN), erythropoietin, nucleases, tumor necrosis factor, colony stimulating factors (e.g., GCSF, GM-CSF, MCSF), insulin, anti-tumor agents and tumor suppressors, blood proteins, fibrin, thrombin, fibrinogen, synthetic thrombin, synthetic fibrin, synthetic fibrinogen, gonadotropins (e.g., FSH, LH, CG, etc.), hormones and hormone analogs (e.g., growth hormone), vaccines (e.g., tumoral, bacterial and viral antigens), somatostatin, antigens, blood coagulation factors, growth factors (e.g., nerve growth factor, insulin-like growth factor), bone morphogenic proteins, TGF-B, protein inhibitors, protein antagonists, and protein agonists, nucleic acids, such as antisense molecules, DNA, RNA, RNAi, oligonucleotides, polynucleotides, and ribozymes.

The present disclosure also provides methods for using supercritical fluids to process various medical devices including, but not limited to, sutures, fasteners, hernia meshes, stents, implants, slings, orthopedic pins, nerve repair devices, tendon repair devices, bone-marrow scaffolds, and combinations thereof. The medical devices according to the present disclosure may be formed from any suitable synthetic biodegradable polymers and copolymers, including those described above formed by ring-opening polymerization of cyclic esters. In embodiments, suitable cyclic esters for forming medical devices include cyclic aliphatic polyesters. Suitable cyclic aliphatic polyesters may include, but are not limited to, lactide (including lactic acid, D-,L- and meso lactide); glycolide (including glycolic acid); ε -caprolactone; p-dioxanone (1,4-dioxan-2-one); trimethylene carbonate (1,3-dioxan-2-one); alkyl derivatives of trimethylene carbonate; γ -valerolactone; β-butyrolactone; γ-butyrolactone; ε-decalactone; hydroxyvalerate; pivalolactone; α,α-diethylpropiolactone; ethylene carbonate; ethylene oxalate; and combinations thereof. Ring-opening polymerization may be carried out in the presence of an initiator, including, but not limited to, diethylene glycol, propylene glycol, mannitol, sorbitol, methoxy-diethylene glycol, and combinations thereof. In addition, a catalyst may be used, including the metal and enzyme-based catalysts discussed above, as well as metal chlorides, esters, alkoxides, and combinations thereof.

In further embodiments, the synthetic biodegradable polymers may include microbial aliphatic polyesters such as polyhydroxyalkonoates (PHAs). PHAs may be produced as oxy-derivates of natural fatty acids and may have a melting point of about 180° C, a decomposition temperature of about 200° C, a crystallinity of from about about 10% to about 80%, and a molecular weight of from about 50 kilo Daltons (kDa) to about 800 kDa.

Medical devices according to the present disclosure formed from aliphatic polyesters described above may be post-processed to remove various impurities therefrom, such as residual monomers and metal catalysts. In particular, residual metal catalysts found in polymer resins processed by melt extrusion or injection molding may cause thermo-oxidative degradation of polymer chains. Further, the presence of residual monomer and transition metal impurities in the finished medical devices may also affect the degradation profiles in vivo. The present disclosure provides for post-processing or extraction of various impurities from medical devices by treating the medical devices with supercritical fluids, such as scCO₂. Supercritical fluids are capable of penetrating the medical devices and dissolving the impurities found therein and extracting the impurities from the devices.

In a further embodiment, the post-processing may include treating the medical devices with supercritical fluids to load various agents into the medical devices, including, but not limited to, colorants, pigments, dyes, bioactive agents, and combinations thereof. These agents are initially dissolved in the supercritical fluids. The medical devices are then brought in contact with the supercritical solution, which distributes the dissolved agent through the medical device due to the high rate of diffusion of the supercritical fluid.

In embodiments, the supercritical fluid may be used to swell the formed medical devices. The rate of removal of the supercritical fluid, namely, the rate of depressurization of the vessel within which the medical device is being treated with the supercritical fluid, may be controlled to achieve void or pore formation within the medical device. The rate of depressurization is directly related to the number and size of the pores. A quick evacuation of the supercritical fluid generates larger voids, which modify handling characteristics of the medical devices, such as suppleness. In addition to the depressurization rate, the size of pores and/or voids depends on the type of material from which the medical device is formed.

In addition to being used as a solvent for delivering various agents, the medical devices according to the present disclosure may be formed within the supercritical fluid. Forming may include, molding, extrusion, drawing, annealing, and combinations thereof. As described above, the supercritical fluid acts as a carrier for delivering various agents into the medical device. In addition to acting as a carrier, the supercritical fluid also acts as a plasticizer, modifying mechanical properties such as the degradation profile of the medical device.

In embodiments, supercritical fluids may be used as a solvent for cross-linking substrates described above with isocyanates. Suitable isocyanates include aromatic, aliphatic and alicyclic isocyanates, including polyisocyanates. Examples include, but are not limited to, aromatic diisocyanates such as 2,4-toluene diisocyanate, 2,6-toluene diisocyanate, 2,2'-diphenylmethane diisocyanate, 2,4'-diphenylmethane diisocyanate, 4,4'-diphenylmethane diisocyanate, diphenyldimethylmethane diisocyanate, dibenzyl diisocyanate, naphthylene diisocyanate, phenylene diisocyanate, xylylene diisocyanate, 4,4'-oxybis(phenyl isocyanate), and/or 2,4,6-trimethyl-1,3-phenylene diisocyanate; aliphatic diisocyanates such as tetramethylxylylene diisocyanate, tetramethylene diisocyanate, hexamethylene diisocyanate, lysine diisocyanate, 2-methylpentane-1,5-diisocyanate, 3-methylpentane-1,5-diisocyanate, hexane-1,6-diisocyanate, and/or 2,2,4-trimethylhexamethylene diisocyanate; and alicyclic diisocyanates such as isophorone diisocyanate, cyclohexane diisocyanate, hydrogenated xylylene diisocyanate, hydrogenated diphenylmethane diisocyanate, and/or hydrogenated trimethylxylylene diisocyanate. In embodiments, combinations of the foregoing isocyanates may be utilized.

In some embodiments, isocyanates may include, but are not limited to, toluene diisocyanate (TDI), 4,4'-diphenylmethane diisocyanate (MDI), isophorone diisocyanate (IPDI), hexamethylene diisocyanate (HMDI), m-tetramethylxylylene diisocyanate (m-TMXDI), p-tetramethylxylylene diisocyanate (p-TMXDI), and combinations thereof.

In further embodiments, the supercritical fluid may be used to weld two or more substrates and/or medical devices. The substrate may be subjected to the supercritical fluid to initially swell the material to provide for a stronger bond during welding. For example, a mesh and a film substrate may be positioned adjacent one another, and upon exposure to supercritical carbon dioxide (scCO₂), at least one of the substrate and the film sufficiently swell in scCO₂, welding the two materials together. Supercritical fluid may be used for attachment of various substrates, such as collagen-based films to any suitable medical device, including, but not limited to, sutures, hernia meshes, as well as any other medical device described in the present disclosure, and combinations thereof.

The following Examples are being submitted to illustrate embodiments of the present disclosure. These Examples are intended to be illustrative only and are not intended to limit the scope of the present disclosure. Also, parts and percentages are by weight unless otherwise indicated. As used herein, "room temperature" refers to a temperature of from about 20° C to about 25° C.

### EXAMPLES

### EXAMPLE 1

Polycaprolactone is grafted onto micronized crystalline cellulose by the ring-opening polymerization of ε-caprolactone in scCO2 in a thermo-regulated reactor of about 250 mL equipped with two sapphire windows for visual control. Pressure and temperature sensors are used to control the operating conditions and are connected to a digital recorder. The reactor is purged with nitrogen prior the loading of the reactants.

About 50 grams of ε-caprolactone monomer, about 0.00245 milliliters (mL) of stannous octoate (Sn(Oct)2) catalyst, and about 10 grams of micronized crystalline cellulose are added to the reactor. The reaction mixture is homogenized via gentle magnetic stirring. The reactor is then evacuated and connected to a carbon dioxide (CO2) feed system. Liquid CO2 is pumped by an air piston pump to about 14 mpa (140 bar) at room temperature and then gradually heated to about 40° C to achieve a pressure of from about 21 mpa (210 bar) to about 21.5 mpa (215 bar).

Polymerization is allowed to proceed for about 24 hours. The reactor is then cooled to about 25° C, and the CO2 is vented through a needle valve into heptane in order to collect unreacted monomer. The micronized cellulose is collected as a white powder. To quantify the grafted fraction of polycaprolactone, the cellulose is washed a few times with toluene in order to dissolve the non-grafted polycaprolactone. The cellulose is then dried under vacuum at about 40° C overnight to constant weight.

### EXAMPLE 2

Oxidation of a cellulose mesh in nitrogen dioxide (NO₂) is conducted in a thermo-regulated reactor of about 250 mL equipped with two sapphire windows for visual control. Pressure and temperature sensors are used to control the operating conditions and are connected to a digital recorder. The reactor is purged with nitrogen prior to the loading of the reactants.

The reactor is initially heated to about 40° C and then the cellulose mesh sample is placed into the reactor on a support grid made of TEFLON®. Liquid CO₂ is pumped by an air operated piston pump. A Coriolis-type mass flow meter is used to control the amount of CO₂ introduced in the reactor. Reactant NO₂ is introduced into the reactor by using a 50 mL highpressure air operated syringe injector. NO₂ is circulated through the reactor for about 4 hours. Post-oxidation washing is performed by pumping CO₂ into the reactor to remove any acidic byproduct of the oxidation and the residually adsorbed NO₂.

### EXAMPLE 3

Polycaprolactone grafting onto an oxidized cellulose mesh is conducted by ring-opening polymerization of ε-caprolactone in scCO2 in the same reactor in which the oxidation of the cellulose of Example 2 was performed. The reactor is initially purged with NO₂ prior to loading of the reactants. About 50 grams of ε-caprolactone monomer and about 0.00245 milliliters (mL) of stannous octoate (Sn(Oct)₂) catalyst are added to the reactor. A support grid, including the oxidized cellulose mesh of Example 2, is lowered into the reactor to immerse the oxidized cellulose mesh of Example 2 into the reaction mixture.

The reaction mixture is homogenized via gentle magnetic stirring. The reactor is then evacuated and connected to a CO₂ feed system. Liquid CO₂ is pumped by an air piston pump to about 14 mpa (140 bar) at room temperature and then gradually heated to about 40° C to achieve a pressure of from about 21 mpa (210 bar) to about 21.5 mpa (215 bar).

Polymerization is allowed to proceed for about 24 hours. The reactor is then cooled to about 25° C, and the CO2 is vented through a needle valve into heptane in order to collect unreacted monomer. The reaction product is collected as a white powder. To quantify the grafted fraction of polycaprolactone, the mesh is washed a few times with toluene in order to dissolve the non-grafted polycaprolactone. The mesh is then also washed with isopropanol. The final product is dried under vacuum at about 40° C overnight to constant weight.

## Claims

1. A process comprising:
oxidizing a substrate material to form an oxidized substrate material;
contacting at least one aliphatic cyclic ester with at least one catalyst in a supercritical fluid to from at least one polyester;
exposing at least a portion of the oxidized substrate material to the supercritical fluid possessing the at least one polyester; and
grafting the at least one polyester onto or within the oxidized substrate material.

2. The process according to claim 1, wherein oxidizing the substrate material comprises exposing the substrate material to an oxidation medium.

3. The process according to claim 2, wherein the oxidation medium is a supercritical fluid selected from the group consisting of supercritical nitrogen dioxide, supercritical carbon dioxide, and combinations thereof.

4. The process according to claims 1 to 3 wherein the at least one polyester is formed at a temperature of from 30° C to 50° C and pressure of from 8 mpa (80 bar) to 18 mpa (180 bar).

5. The process according to any of claims 1 to 4, wherein the at least one aliphatic cyclic ester is selected from the group consisting of lactide, glycolide, ε -caprolactone, p-dioxanone, trimethylene carbonate, alkyl derivatives of trimethylene carbonate, γ -valerolactone, β-butyrolactone, γ-butyrolactone, ε-decalactone, hydroxyvalerate, pivalolactone, α,α-diethylpropiolactone, ethylene carbonate, ethylene oxalate, and combinations thereof.

6. A process according to any one of the preceding claims wherein the substrate material is cellulose.

7. The process according to any preceding claim wherein the supercritical fluid selected from the group consisting of supercritical nitrogen dioxide, supercritical carbon dioxide, and combinations thereof.

8. The process according to any one of the preceding claims, wherein the at least one catalyst is selected from the group consisting of a metal alkoxide, a rare earth complex, and an enzyme.

9. The process according to claim 8, wherein the metal alkoxide is selected from the group consisting of aluminum alkoxide, zinc alkoxide, tin alkoxide, and combinations thereof.

10. The process according to claim 1, wherein the at least one catalyst is stannous octoate.

## Patentansprüche

1. Ein Verfahren, umfassend:
- die Oxidierung eines Substratmaterials, um ein oxidiertes Substratmaterial zu bilden;
- Kontaktierung von mindestens einem aliphatisch-zyklischen Ester mit mindestens einem Katalysatoren in einer superkritischen Flüssigkeit, um mindestens einen Polyester zu bilden;
- Aussetzung von mindestens einem Teil des oxidierten Substratmaterials der superkritischen Flüssigkeit mit dem mindestens einen Polyester; und
- Pfropfung des mindestens einen Polyesters auf oder in das oxidierte Substratmaterial.

2. Das Verfahren gemäß Anspruch 1, wobei die Oxidierung des Substratmaterials die Aussetzung des Substratmaterials einem Oxidierungsmittel.

3. Das Verfahren gemäß Anspruch 2, wobei das Oxidierungsmittel eine superkritische Flüssigkeit ist, die aus der Gruppe ausgewählt wird, die aus superkritischem Stickstoffdioxid, superkritischem Kohlendioxid und Kombinationen daraus besteht.

4. Das Verfahren gemäß den Ansprüchen 1 bis 3, wobei das mindestens eine Polyester bei einer Temperatur von zwischen 30 °C und 50 °C und einem Druck von 8 mpa (80 Bar) bis 18 mpa (180 Bar) gebildet wird.

5. Das Verfahren gemäß einem der Ansprüche 1 bis 4, wobei der mindestens eine aliphatisch-zyklische Ester aus der Gruppe ausgewählt wird, die aus Lactid, Glycolid, ε-Caprolacton, p-Dioxanon, Trimethylencarbonat, Alkyl-Derivative aus Trimethylencarbonat, γ-Valerolacton, β-Butyrolacton, γ-Butyrolacton, ε-Decalacton, Hydroxyvalerat, Pivalolacton, α,α-Diethylpropiolacton, Ethylen-Carbonat, Ethylen-Oxalat und Kombinationen daraus besteht.

6. Ein Verfahren gemäß einem der vorstehenden Ansprüche, wobei das Substratmaterial Zellulose ist.

7. Das Verfahren gemäß einem der vorstehenden Ansprüche, wobei die superkritische Flüssigkeit aus der Gruppe ausgewählt wird, die aus superkritischem Stickstofifdioxid, superkritischem Kohlendioxid und Kombinationen daraus besteht.

8. Das Verfahren gemäß einem der vorstehenden Ansprüche, wobei der mindestens eine Katalysator aus der Gruppe ausgewählt wird, die aus einem Metall-Alkoholat, einem Komplex aus rarer Erde und einem Enzym besteht.

9. Das Verfahren gemäß Anspruch 8, wobei das Metall-Alkoholat aus der Gruppe ausgewählt wird, die aus Aluminiumalkoxid, Zinkalkoxid, Zinnalkoxid und Kombinationen daraus besteht.

10. Das Verfahren gemäß Anspruch 1, wobei der mindestens eine Katalysator Zinnoktoat ist.

## Revendications

1. Procédé comprenant les étapes consistant à :
oxyder un matériau de substrat pour former un matériau de substrat oxydé ;
mettre en contact au moins un ester aliphatique cyclique avec au moins un catalyseur dans un fluide supercritique pour former au moins un polyester ;
exposer au moins une partie du matériau de substrat oxydé au fluide supercritique possédant le au moins un polyester ; et
greffer le au moins un polyester sur ou dans le matériau de substrat oxydé.

2. Procédé selon la revendication 1, dans lequel l'oxydation du matériau de substrat comprend l'exposition du matériau de substrat à un agent d'oxydation.

3. Procédé selon la revendication 2, dans lequel l'agent d'oxydation est un fluide supercritique choisi dans le groupe constitué du dioxyde d'azote supercritique, du dioxyde de carbone supercritique et de leurs combinaisons.

4. Procédé selon les revendications 1 à 3, dans lequel le au moins un polyester est formé à une température de 30 °C à 50 °C et à une pression de 8 MPa (80 bars) à 18 MPa (180 bars).

5. Procédé selon l'une quelconque des revendications 1 à 4, dans lequel le au moins un ester aliphatique cyclique est choisi dans le groupe constitué d'un lactide, d'un glycolide, de ε-caprolactone, de p-dioxanone, de carbonate de triméthylène, de dérivés alkyliques de carbonate de triméthylène, de γ-valérolactone, de β-butyrolactone, de γ-butyrolactone, de ε-décalactone, d'hydroxyvalérate, de pivalolactone, de α,α-diéthylpropiolactone, de carbonate d'éthylène, d'oxalate d'éthylène et de leurs combinaisons.

6. Procédé selon l'une quelconque des revendications précédentes, dans lequel le matériau de substrat est la cellulose.

7. Procédé selon l'une quelconque des revendications précédentes, dans lequel le fluide supercritique est choisi dans le groupe constitué du dioxyde d'azote supercritique, du dioxyde de carbone supercritique et de leurs combinaisons.

8. Procédé selon l'une quelconque des revendications précédentes, dans lequel le au moins un catalyseur est choisi dans le groupe constitué d'un alcoxyde métallique, d'un complexe de terres rares et d'un enzyme.

9. Procédé selon la revendication 8, dans lequel l'alcoxyde métallique est choisi dans le groupe constitué de l'alcoxyde d'aluminium, de l'alcoxyde de zinc, de l'alcoxyde d'étain et de leurs combinaisons.

10. Procédé selon la revendication 1, dans lequel le au moins un catalyseur est l'octoate stanneux.
